# EUROPÄISCHE PATENTSCHRIFT

(11) **EP 0 842 700 B1**
(45) Veröffentlichungstag und Bekanntmachung des Hinweises auf die Patenterteilung: **24.03.1999**
(21) Anmeldenummer: 97119304.0
(22) Anmeldetag: 05.11.1997
(51) Int. Cl.: B01J 37/02, B01D 53/94

(54) **Abgasreinigungskatalysator mit Verbessertem Umsatz für Kohlenwasserstoffe**
Exhaust gas purifying catalyst with improved hydrocarbon conversion
Catalyseur pour la purification de gaz d'échappement avec conversion d'hydrocarbures amélioré

(30) Priorität: 11.11.1996 DE 19646297; 04.10.1997 DE 19743850
(43) Veröffentlichungstag der Anmeldung: 20.05.1998
(73) Patentinhaber: DEGUSSA AG, 60311 Frankfurt (DE)
(72) Erfinder: Mussmann, Lothar, Dr., 63067 Offenbach (DE); Lindner, Dieter, Dr., 63457 Hanau (DE); van Yperen, Renee, Dr., 3632 XC Loenen a/d Vecht (NL); Lox, Egbert, Dr., 63457 Hanau (DE); Kreuzer, Thomas, Dr., 61184 Karben (DE)

(56) Entgegenhaltungen:
- EP-A- 0 782 880
- WO-A-97/22404
- DE-A- 4 239 875
- US-A- 5 407 880

## Beschreibung

Die Erfindung betrifft einen Abgasreinigungskatalysator mit verbessertem Umsatz für Kohlenwasserstoffe, welcher als katalytisch wirksame Komponenten Platingruppenmetalle enthält und zwei auf einem Tragkörper aufgebrachte übereinanderliegende Funktionsschichten aufweist.

Verbrennungsmotoren emittieren Schadstoffe, die durch geeignete Abgasreinigungskatalysatoren zu unschädlichen Verbindungen umgesetzt werden müssen. Die Hauptschadstoffe sind Kohlenmonoxid, Stickoxide und unverbrannte Kohlenwasserstoffe. Sie können an platingruppenmetallhaltigen Katalysatoren zu Wasser, Kohlendioxid und Stickstoff umgesetzt werden. Man unterscheidet Dreiweg-Katalysatoren, Oxidationskatalysatoren und Reduktionskatalysatoren. Die Grenze zwischen diesen Katalysatoren ist fließend und hängt insbesondere auch von der Abgaszusammensetzung ab.

Dreiweg-Katalysatoren sind in der Lage, alle drei genannten Schadstoffe unter stöchiometrischen Abgasbedingungen gleichzeitig umzusetzen. Hierbei werden die Stickoxide unter gleichzeitiger Oxidation von Kohlenmonoxid und Kohlenwasserstoffen zu Stickstoff reduziert. DreiwegKatalysatoren enthalten als wesentliche katalytische Komponente Rhodium in Kombination mit Platin und/oder Palladium. Ein solcher Rhodium und Palladium enthaltender Katalysator wird zum Beispiel in der DE 38 35 184 C2 beschrieben. Die Anwesenheit von Rhodium im DreiwegKatalysator ist wichtig für seine Reduktionsfunktion. Katalysatoren, die nur Platin und/oder Palladium enthalten, weisen nur eine unbefriedigende reduktive Wirkung auf und werden deshalb überwiegend als Oxidationskatalysatoren eingesetzt.

Heutige Dreiweg- und Oxidationskatalysatoren sind in der Lage, die entsprechenden Schadstoffe nach Erreichen ihrer Betriebstemperatur mit Umsetzungsraten von mehr als 70 % zu unschädlichen Produkten umzusetzen. Ein wesentliches Problem stellt jedoch nach wie vor der Kaltstart von Verbrennungsmotoren dar. Während der sogenannten Kaltstartphase, die etwa die ersten 100 Sekunden nach dem Motorstart umfaßt, ist der Abgasreinigungskatalysator noch kalt und daher inaktiv. Mit steigender Abgastemperatur erwärmt sich der Katalysator. Die zunehmende Aktivität des Katalysators für die Umsetzung der Schadstoffe wird durch die Anspringtemperatur des jeweiligen Schadstoffs charakterisiert. Es handelt sich dabei um diejenige Temperatur, bei der der entsprechende Schadstoff zu 50 % umgesetzt wird. Die Anspringtemperaturen moderner Katalysatoren liegen im Temperaturintervall zwischen 200 und 400°C.

Die hauptsächliche Schadstoffkomponente während der Kaltstartphase stellen unverbrannte Kohlenwasserstoffe dar. Zur Beurteilung der Reinigungswirkung von Abgasreinigungskatalysatoren wurden verschiedene Prüfverfahren entwickelt. Ein häufig verwendetes Prüfverfahren ist die sogenannte FTP 75-Prüfung, die in den USA entwickelt wurde. In Europa ist das ECE-Prüfverfahren genormt.

Die FTP 75-Prüfung erstreckt sich über einen Zeitraum von 2500 Sekunden nach dem Kaltstart des Verbrennungsmotors und ist in drei Abschnitte unterteilt. Die in diesen drei Abschnitten emittierten Schadstoffe werden in drei Beuteln gesammelt und anschließend analysiert. Der erste Abschnitt umfaßt die eigentliche Kaltstartphase und ist nach 500⁻Sekunden abgeschlossen. Die folgenden beiden Abschnitte simulieren wechselnde Lastbedingungen und einen Heißstart.

Für die endgültige Beurteilung eines Abgasreinigungs-systems, welches aus mehreren Katalysatoren und Adsorbern bestehen kann, werden die in allen drei Beuteln gesammelten Schadstoffmengen herangezogen. Es hat sich gezeigt, daß wesentliche Verbesserungen der Gesamtbeurteilung insbesondere durch Verbesserungen der Schadstoffumsetzung während der Kaltstartphase zu erreichen sind. Die Umsetzungsraten der betriebswarmen Katalysatoren lassen nur noch geringfügige Verbesserungen zu, die die Gesamtbeurteilung nach dem FTP 75-Prüfverfahren kaum beeinflussen können. So emittiert ein Verbrennungsmotor während der ersten 100 Sekunden nach dem Kaltstart etwa zwei Drittel der insgesamt während der FTP 75-Prüfung emittierten Kohlenwasserstoffmenge.

Zur Verminderung dieser Kohlenwasserstoffemissionen wurden unterschiedliche Kombinationen von Kohlenwasserstoffadsorbern mit Katalysatoren vorgeschlagen.

Die US 5,078,979 beschreibt ein Verfahren zur Abgasreinigung, bei dem das Abgas zuerst über einen Kohlenwasserstoffadsorber und anschließend über einen Katalysator geleitet wird. Die im kalten Abgas enthaltenen Kohlenwasserstoffe werden von dem Adsorber aufgenommen bis dieser eine Temperatur von etwa 150°C erreicht hat. Oberhalb dieser Temperatur beginnen die Kohlenwasserstoffe wieder vom Adsorber zu desorbieren und werden von dem dann schon wärmeren Katalysator zu unschädlichen Produkten umgesetzt. Als Adsorber werden Molekularsiebe (Zeolithe) vorgeschlagen, die Kohlenwasserstoffe bevorzugt vor dem im Abgas ebenfalls enthaltenen Wasserdampf adsorbieren und eine hohe Temperaturstabilität aufweisen.

Nachteilig bei einem solchen System ist die Tatsache, daß der Adsorber selber dem Abgas Wärme während der Aufheizphase entzieht, die dem nachgeschalteten Katalysator fehlt, so daß dieser sich langsamer als ohne vorgeschalteten Adsorber erwärmt. Die Kombination aus räumlich getrenntem Adsorber und Katalysator vermindert zwar die Emission der Kohlenwasserstoffe während der Kaltstartphase, in der Gesamtbeurteilung nach dem FTP 75-Prüfverfahren schneiden sie jedoch schlechter ab als ein einzelner DreiwegKatalysator, da die zunächst adsorbierten Kohlenwasserstoffe nach Überschreiten der Desorptionstemperatur desorbiert werden und den noch nicht ausreichend aktiven Katalysator zu einem erheblichen Teil ohne Umsetzung zu unschädlichen Komponenten passieren.

Zur Verbesserung dieser Situation wird von der DE 42 39 875 A1 vorgeschlagen, einen Oxidationskatalysator mit einem Kohlenwasserstoffadsorber auf einem Tragkörper zu kombinieren. Oxidationskatalysator und Kohlenwasserstoffadsorber sind in Form übereinanderliegender Beschichtungen auf dem Tragkörper aufgebracht, wobei die Adsorberbeschichtung auf der Katalysatorbeschichtung liegt und direkt mit dem Abgas in Kontakt tritt.

Der Oxidationskatalysator enthält Platin und/oder Palladium als katalytisch aktive Komponenten. Der Adsorber enthält eine Mischung eines dealuminierten Y-Zeolithen mit einem Zeolith ZSM5, wobei der Y-Zeolith ein Si/Al-Verhältnis von über 40 und der Zeolith ZSM5 ein Si/Al-Verhältnis von über 20 aufweist.

Die EP 0 716 877 A1 schlägt ebenfalls die Kombination eines Kohlenwasserstoffadsorbers mit einem Katalysator in Form zweier übereinanderliegender Beschichtungen vor. Die Katalysatorbeschichtung liegt auf der Adsorberbeschichtung und enthält als katalytisch aktive Komponenten eines oder mehrere Platingruppenmetalle aus der Gruppe Platin, Palladium, Rhodium, Ruthenium und Iridium auf Aluminiumoxid, Ceroxid und Zirkonoxid. Als Adsorbermaterial wird ein Zeolith mit einem Gewichtsverhältnis von Siliziumdioxid zu Aluminiumoxid von mehr als 300 eingesetzt. Als Tragkörper dient ein monolithischer Wabenkörper aus Cordierit mit parallelen Strömungskanälen für das Abgas. Die Adsorberbeschichtung ist als erste Schicht direkt auf die Innenwandflächen der Strömungskanäle aufgebracht. Wegen der schlechten Haftung von Zeolithbeschichtungen auf ihrer Unterlage, enthält die Adsorberschicht neben Zeolith in gleicher Menge noch kolloidales Siliziumdioxid als Binder. Durch diesen hohen Anteil an kolloidalem Material besteht die Gefahr, daß die Poren des Zeoliths zum Teil verstopft und damit seine Adsorptionkapazität verschlechtert wird.

Die vorgeschlagenen Lösungen sind bezüglich ihrer Kohlenwasserstoffunterdrückung über alle drei Abschnitte der FTP 75-Prüfung noch unbefriedigend. Die Kohlenwasserstoffadsorption während des ersten Abschnittes ist zufriedenstellend, jedoch ergeben sich Mängel bei der dynamischen Schadstoffumsetzung während der Abschnitte 2 und 3 der FTP 75-Prüfung. Insbesondere ist auch die Alterungsstabilität der Schadstoffumsetzung unbefriedigend.

Aufgabe der vorliegenden Erfindung ist es daher, einen Abgasreinigungskatalysator anzugeben, der eine verbesserte Kohlenwasserstoffunterdrückung über alle drei Abschnitte des FTP 75-Prüfverfahrens bei gleichzeitig verbesserter Alterungsstabilität aufweist.

Diese Aufgabe wird durch einen Abgasreinigungskatalysator gelöst, welcher als katalytisch wirksame Komponenten Platingruppenmetalle enthält und zwei auf einem Tragkörper aufgebrachte übereinanderliegende Funktionsschichten aufweist. Der Abgasreinigungskatalysator ist dadurch gekennzeichnet, daß die erste Funktionsschicht eine Mischung eines ersten Katalysators mit mindestens einem Zeolithen und die auf der ersten Funktionsschicht aufgebrachte zweite Funktionsschicht eine Mischung eines zweiten Katalysators mit mindestens einem Zeolithen enthalten, wobei die Zeolithe ein Molverhältnis von Siliziumdioxid/Aluminiumoxid von mehr als 40 aufweisen und daß als Platingruppenmetalle wenigstens Palladium und Rhodium vorhanden sind, die voneinander getrennt in jeweils nur einem der beiden Katalysatoren enthalten sind.

Als Funktionsschicht wird im Rahmen dieser Erfindung eine Beschichtung verstanden, die eine bestimmte Wirkung auf das Abgas ausübt. Hierbei kann es sich um die Adsorption von Schadstoffkomponenten oder um eine katalytische Wirkung oder um eine Kombination von beidem handeln. Beide Funktionsschichten des Abgasreinigungskatalysators enthalten zur Adsorption der Kohlenwasserstoffe wenigstens einen Zeolithen mit einem Molverhältnis von Siliziumdioxid/Aluminiumoxid von mehr als 40. Das Adsorbermaterial der Funktionsschichten weist selbst keine katalytisch aktiven Edelmetall-Komponenten auf, es ist jedoch jeweils mit einem Katalysator gemischt. Adsorberwirkung und Katalysatorwirkung liegen also in den Funktionsschichten räumlich eng benachbart vor und garantieren damit einen optimalen Umsatz der mit steigender Abgastemperatur wieder desorbierten Kohlenwasserstoffe. In dem erfindungsgemäßen Abgasreinigungskatalysator weisen also die als Adsorber fungierenden Zeolithe keine katalytisch aktiven Komponenten auf ihrer spezifischen Oberfläche auf. Dadurch wird die ansonsten häufig zu beobachtende Verkokung der Zeolithe vermieden.

Die beiden Katalysatoren der Funktionsschichten weisen unterschiedliche katalytische Wirkungen auf. Während der eine Katalysator durch Verwendung von Palladium und gegebenenfalls Platin im wesentlichen eine oxidative Wirkung entfaltet, weist der Katalysator der anderen Funktionsschicht durch Verwendung von Rhodium und gegebenenfalls Platin eine reduktive Wirkung auf. Durch die Anordnung der beiden Katalysatoren in unterschiedlichen Schichten sind Palladium und Rhodium räumlich voneinander getrennt. Dadurch wird eine Legierungsbildung zwischen Palladium und Rhodium bei hohen Abgastemperaturen und die mit der Legierungsbildung einhergehende Verschlechterung der katalytischen Aktivität vermieden.

Der Rhodium enthaltende Reduktionskatalysator kann entweder in der ersten oder in der darüberliegenden zweiten Funktionsschicht untergebracht werden, während der Palladium enthaltende Oxidationskatalysator in der jeweils anderen Schicht angeordnet wird. Bevorzugt wird der Reduktionskatalysator jedoch in die zweite Funktionsschicht eingearbeitet, die direkt mit dem Abgas in Kontakt kommt. Dadurch kann der Reduktionskatalysator die im Abgas enthaltenen Stickoxide optimal umsetzen, wobei das im Abgas enthaltene Kohlenmonoxid und die Kohlenwasserstoffe sowie die während des Aufheizens vom Adsorbermaterial wieder desorbierenden Kohlenwasserstoffe als Reduktionsmittel dienen.

Die Katalysatoren der Funktionsschichten können neben Palladium, Rhodium und Platin noch weitere Edelmetalle der Platingruppe aufweisen. Die Platingruppenmetalle umfassen Ruthenium, Rhodium, Palladium, Osmium, Iridium und Platin. Als Träger für die Platingruppenmetalle enthalten die Katalysatoren aktives Aluminiumoxid. Mit aktivem Aluminiumoxid werden Aluminiumoxide mit spezifischen Oberflächen (gemessen nach DIN 66 132) von mehr als 10 m²/g verstanden. Sie weisen unterschiedliche Kristallstrukturen auf (Gamma-, Delta-, Theta-, Kappa- und Eta-Aluminiumoxid), die bei Erwärmung über 1150 K in das thermisch stabile AlfaAluminiumoxid übergehen (siehe Ullmann's Encyclopedia of Industrial Chemistry; 5th Edition; 1985; Vol. A1, 561 - 562).

Die katalytisch aktiven Platingruppenmetalle sind auf dem aktiven Aluminiumoxid in einer Konzentration von 0,1 bis 10 Gew.-% bezogen auf das Gesamtgewicht des jeweiligen Katalysators aufgebracht. Hierzu wird das aktive Aluminiumoxid in einem separaten Fertigungsschritt mit löslichen Vorstufen der entsprechenden Metalle imprägniert, getrocknet und kalziniert. Nach diesem Fertigungsschritt liegen die Platingruppenmetalle auf dem Aluminiumoxid in hochdisperser Form vor. Beide Katalysatoren können zusätzlich platingruppenmetallfreies aktives Aluminiumoxid, Ceroxid und/oder Zirkonoxid in einer Menge von 0 bis 90 Gew.-%, bezogen auf das Gesamtgewicht des jeweiligen Katalysators, enthalten.

Bevorzugt wird ein Gewichtsverhältnis des jeweiligen Katalysators einer Funktionsschicht zu den darin enthaltenen Zeolithen von 3 : 1 gewählt. Das Gewichtsverhältnis kann jedoch zur Optimierung der katalytischen Wirkung des Abgasreinigungskatalysators im Bereich zwischen 1 : 5 und 5 : 1 variiert werden.

Als Adsorbermaterialien werden Zeolithe mit Molverhältnissen von mehr als 40 verwendet. Durch dieses hohe Molverhältnis adsorbieren die Zeolithe bevorzugt Kohlenwasserstoffe vor Wasser und weisen eine hohe Temperaturstabilität auf. Bevorzugt wird in der ersten Funktionsschicht ein Zeolith ZSM5 mit einem Molverhältnis von mehr als 40 und in der zweiten Funktionsschicht ein dealuminierter Y-Zeolith mit einem Molverhältnis von mehr als 100 eingesetzt.

Als Tragkörper für den Abgasreinigungskatalysator können keramische oder metallische Schäume mit offenzelliger Porenstruktur oder keramische oder metallische Wabenkörper mit parallelen Strömungskanälen für das Abgas verwendet werden. Es handelt sich hierbei um Tragkörper, die allgemein als Tragkörper für Autoabgaskatalysatoren verwendet werden. Diese Tragkörper werden mit Hilfe bekannter Verfahren mit den beiden Funktionsschichten beschichtet. Hierzu wird zunächst eine wäßrige Beschichtungsdispersion aus den vorgesehenen Bestandteilen der betreffenden Funktionsschicht angefertigt. Der Tragkörper kann zum Beispiel durch Übergießen mit dieser Beschichtungsdispersion oder durch Tauchen in diese Dispersion beschichtet werden. Nach Freiblasen eventuell verschlossener Strömungspfade bzw. Strömungskanäle werden die Tragkörper getrocknet und anschließend bei Temperaturen bis 500°C kalziniert. Die hierbei im einzelnen anzuwendenden Techniken sind dem Fachmann bekannt.

Die Funktionsschichten werden jeweils in einer Konzentration von 10 bis 300 Gramm pro Liter Tragkörpervolumen auf die Tragkörper aufgebracht.

Der erfindungsgemäße Abgasreinigungskatalysator kann allein oder in Kombination mit weiteren Katalysatoren in Abgasreinigungssystemen von Verbrennungsmotoren eingesetzt werden.

Zur Erläuterung der Erfindung wurden verschiedene Abgasreinigungskatalysatoren auf keramischen Trägerkörpern hergestellt. Bei den Tragkörpern handelte es sich um Wabenkörper aus Cordierit mit einer Zelldichte (Anzahl der Strömungskanäle pro Querschnittsfläche) von 62 cm⁻², einem Durchmesser von 11,84 cm, einer Länge von 15,24 cm und einer Wandstärke der Strömungskanäle von 0,2 mm. Das Volumen der Tragkörper betrug somit 1,68 l.

Die Reinigungswirkung der Katalysatoren wurde mittels des FTP 75-Prüfverfahrens an einem Fahrzeug mit 4 Zylindern und 2 l Hubraum aus dem Modelljahr 1994 bestimmt. Das Verhältnis des installierten Katalysatorvolumens zum Hubraum des Fahrzeugs betrug 0,84.

Die Gasproben für die FTP 75-Prüfung wurden dem Abgassystem hinter dem Prüfling entnommen.

### Vergleichsbeispiel 1

Auf einem der Wabenkörper wurde eine Einzelschicht mit folgender Zusammensetzung aufgebracht:
- 20 g/l La/Al₂O₃: γ-Aluminiumoxid, stabilisiert mit 2 bis 4 Gew.-% Lanthan, berechnet als Lanthanoxid
- 50 g/l La/Al₂O₃: stabilisiertes γ-Aluminiumoxid mit darauf vorfixiertem Palladium und Rhodium im Gewichtsverhältnis 14 : 1 und einer Konzentration von 7 Gew.-%, bezogen auf das Gesamtgewicht des Aluminiumoxids plus Palladium und Rhodium
- 25 g/l: Cer/Zirkonmischoxid (75 Gew.-% Ceroxid, 25 Gew.-% Zirkonoxid)
- 25 g/l: Ceroxid ex Acetat
- 18 g/l: Zirkonoxid ex Acetat
- 30 g/l: dealuminierter Y-Zeolith (Molverhältnis ≥ 200)
- 30 g/l: Zeolith ZSM5 (Molverhältnis ≥ 120)

Die Gesamtbeladungsmenge des Wabenkörpers betrug somit 198 g/l, davon entfielen 3,5 g/l auf Palladium und Rhodium.

Zur Vorfixierung von Palladium und Rhodium auf einem Teil des stabilisierten Aluminiumoxids wurde die vorgesehene Menge Aluminiumoxid mit einer wäßrigen Lösung von Rhodiumnitrat und Palladiumnitrat imprägniert, bei 120°C getrocknet und anschließend für die Dauer von 4 Stunden bei 500°C kalziniert.

Das so erhaltene Pulver wurde zur Anfertigung einer Beschichtungsdispersion mit den anderen Komponenten des Katalysators in Wasser dispergiert und durch Mahlen homogenisiert. Nach der Mahlung betrug die mittlere Partikelgröße der Feststoffe der Beschichtungsdispersion etwa 6 µm. Der Feststoffgehalt der Beschichtungsdispersion lag bei 50 Gew.-%.

Der Wabenkörper wurde durch Eintauchen in die Beschichtungsdispersion beschichtet, 10 Minuten bei 120°C getrocknet und abschießend 4 Stunden bei 300°C kalziniert.

### Vergleichsbeispiel 2

Auf einem zweiten Wabenkörper wurde eine Einzelschicht mit im wesentlichen gleicher Zusammensetzung wie in Vergleichsbeispiel 1 aufgebracht. Im Unterschied zu Vergleichsbeispiel 1 wurde nur Palladium auf dem Aluminiumoxid vorfixiert. Die notwendige Menge Rhodium wurde erst nach der Beschichtung durch Tauchen des Wabenkörpers in eine Imprägnierlösung mit Rhodiumnitrat in die Beschichtung eingebracht. Um einen direkten Kontakt des Rhodiums mit dem vorfixierten Palladium zu verhindern, wurde der Imprägnierlösung Zirkonoxidsol zur Komplexierung des Rhodiums zugegeben. Die fertige Imprägnierlösung enthielt 9 Gew.-% Rhodiumnitrat und 30 Gew.-% Zirkonoxidsol, jeweils bezogen auf das Gesamtgewicht der Imprägnierlösung. Nach der Imprägnierung wurde der Katalysator 6 Stunden bei 120°C getrocknet und anschließend 2 Stunden bei 500°C kalziniert.

### Beispiel

Auf einem weiteren Wabenkörper wurden zur Herstellung eines erfindungsgemäßen Abgasreinigungskatalysators nacheinander zwei Schichten mit folgenden Zusammensetzungen aufgebracht:

### 1. Schicht: (direkt auf dem Wabenkörper)

- 60 g/l La/Al₂O₃: stabilisiertes Aluminiumoxid mit darauf vorfixiertem Palladium in einer Konzentration von 5,45 Gew.-%
- 15 g/l: Cer/Zirkonmischoxid (75/25)
- 15 g/l: Ceroxid ex Acetat
- 15 g/l: Zirkonoxid ex Acetat
- 30 g/l: Zeolith ZSM5 (Molverhältnis ≥ 120)

### 2. Schicht

- 10 g/l La/Al₂O₃: stabilisiertes Aluminiumoxid mit darauf vorfixiertem Rhodium in Konzentration von 2,3 Gew.-%
- 15 g/l: Cer/Zirkonmischoxid (75/25)
- 15 g/l: La/Al₂O₃
- 30 g/l: dealuminierter Y-Zeolith (Molverhältnis ≥ 200)

Die Gesamtbeladung des Wabenkörpers betrug somit 205 g/l, davon entfielen 3,5 g/l auf Palladium und Rhodium.

### Vergleichsbeispiel 3

Es wurde ein weiterer Wabenkörper mit einer Doppelschicht wie im erfindungsgemäßen Beispiel versehen. Die Zeolithe wurden jedoch durch anteiliges Erhöhen der anderen Beschichtungskomponenten ersetzt.

### 1. Schicht: (direkt auf dem Wabenkörper)

- 77 g/l La/Al₂O₃: stabilisiertes Aluminiumoxid mit daraufvorfixiertem Palladium in einerKonzentration von 4,25 Gew.-%
- 19 g/l: Cer/Zirkonmischoxid (75/25
- 19 g/l: Ceroxid ex Acetat
- 19 g/l: Zirkonoxid ex Acetat

### 2. Schicht

- 18 g/l La/Al₂O₃: stabilisiertes Aluminiumoxid mit darauf vorfixiertem Rh (1,28 Gew.-%)
- 26 g/l: Cer/Zirkonmischoxid (75/25)
- 26 g/l: La/Al₂O₃

Die Gesamtbeladung des Wabenkörpers betrug somit 204 g/l, davon entfielen 3,5 g/l auf Palladium und Rhodium.

### Anwendungsbeispiel

Es wurden folgende Katalysatoren auf ihre Reinigungsleistung überprüft:
1. Katalysator von Vergleichsbeispiel 1
2. Katalysator von Vergleichsbeispiel 2
3. Katalysator des Beispiels
4. Katalysator von Vergleichsbeispiel 3

Die Ergebnisse der FTP 75-Prüfung sind in der folgenden Tabelle aufgelistet. Vor der Prüfung wurden die Katalysatoren bei einer Abgastemperatur von 850°C für die Dauer von 50 Stunden am Motor gealtert.

| **Abgasreinigungs- Katalysator** | **Kohlenwasserstoffe im Beutel 1 [g/Meile]** | **Gesamt- Kohlenwasserstoffe (alle 3 Beutel) [g/Meile]** |
|---|---|---|
| Vergleichsbeisp. 1 | 0,69 | 0,19 |
| Vergleichsbeisp. 2 | 0,6 | 0,17 |
| Vergleichsbeisp. 3 | 0,76 | 0,18 |
| Beispiel | 0,5 | 0,12 |

Wie diese Ergebnisse zeigen, weist der erfindungsgemäße Katalysator die beste Umsetzung der Schadstoffe auf. Dieses gute Ergebnis wird durch die Verwendung von Zeolithen in beiden Schichten und durch die räumliche Trennung von Palladium und Rhodium durch Unterbringung in zwei unterschiedlichen schichten erreicht. Darüber hinaus weist die Beschichtung des erfindungsgemäßen Katalysators eine gute Haftfestigkeit auf dem Wabenkörper ohne die Verwendung von kolloidalem Siliziumdioxid als Bindermaterial auf. Die gute Haftfestigkeit des erfindungsgemäßen Katalysators beruht auf der Mischung des Zeolithmaterials der ersten Schicht mit weiteren aktiven Schichtkomponenten
(La/Al₂O₃, Cer/Zirkonmischoxid, Ceroxid, Zirkonoxid).

## Patentansprüche

1. Abgasreinigungskatalysator mit verbessertem Umsatz für Kohlenwasserstoffe, welcher als katalytisch wirksame Komponenten Platingruppenmetalle enthält und zwei auf einem Tragkörper aufgebrachte übereinanderliegende Funktionsschichten aufweist,
**dadurch gekennzeichnet,**
daß die erste Funktionsschicht eine Mischung eines ersten Katalysators mit mindestens einem Zeolithen und die auf der ersten Funktionsschicht aufgebrachte zweite Funktionsschicht eine Mischung eines zweiten Katalysators mit mindestens einem Zeolithen enthalten, wobei die Zeolithe ein Molverhältnis von Siliziumdioxid/Aluminiumoxid von mehr als 40 aufweisen und daß als Platingruppenmetalle wenigstens Palladium und Rhodium vorhanden sind, die voneinander getrennt in jeweils nur einer der beiden Funktionsschichten enthalten sind.

2. Abgasreinigungskatalysator nach Anspruch 1,
**dadurch gekennzeichnet,**
daß der erste Katalysator Palladium und gegebenenfalls Platin und der zweite Katalysator Rhodium und gegebenenfalls Platin auf einem aktiven Aluminiumoxid enthalten, wobei die Konzentration der Platingruppenmetalle auf dem aktiven Aluminiumoxid 0,1 bis 10 Gew.-% bezogen auf das Gesamtgewicht des jeweiligen Katalysators beträgt.

3. Abgasreinigungskatalysator nach Anspruch 2,
**dadurch gekennzeichnet,**
daß erster und/oder zweiter Katalysator zusätzlich platingruppenmetallfreies aktives Aluminiumoxid, Ceroxid und/oder Zirkonoxid in einer Menge von 0 bis 90 Gew.-% bezogen auf das Gesamtgewicht des jeweiligen Katalysators enthalten.

4. Abgasreinigungskatalysator nach Anspruch 3,
**dadurch gekennzeichnet,**
daß der Zeolith der ersten Funktionsschicht ein ZSM5 Zeolith mit einem Molverhältnis von mehr als 40 und der zweite Zeolith der zweiten Funktionsschicht ein dealuminierter Zeolith Y mit einem Molverhältnis von mehr als 100 ist.

5. Abgasreinigungskatalysator nach Anspruch 4,
**dadurch gekennzeichnet,**
daß als Tragkörper keramische oder metallische Schäume mit offenzelliger Porenstruktur oder keramische oder metallische Wabenkörper mit parallelen Strömungskanälen für das Abgas verwendet werden, deren Innenwandflächen mit den Funktionsschichten in einer Konzentration von 10 bis 300 Gramm pro Liter Tragkörpervolumen für jede der beiden Funktionsschichten beschichtet werden.

6. Abgasreinigungssystem nach einem der vorstehenden Ansprüche,
**dadurch gekennzeichnet,**
daß das Gewichtsverhältnis des Katalysators einer Funktionsschicht zu den Zeolithen der Funktionsschicht 1 : 5 bis 5 : 1 beträgt.

7. Verwendung des Abgasreinigungskatalysators nach einem der vorstehenden Ansprüche in einem Abgasreinigunssystem von Verbrennungsmotoren.

## Claims

1. An exhaust gas treatment catalyst with improved hydrocarbon conversion which contains platinum group metals as catalytically active components and has two functional layers applied one on top of the other on a supporting structure,
characterised in that
the first functional layer contains a mixture of a first catalyst and at least one zeolite and the second functional layer applied on top of the first functional layer contains a mixture of a second catalyst and at least one zeolite, wherein the zeolites have a molar ratio of silicon dioxide/aluminium oxide of more than 40 and that at least palladium and rhodium are present as platinum group metals and are each contained separately from each other in one of the two functional layers.

2. An exhaust gas treatment catalyst according to Claim 1,
characterised in that
the first catalyst contains palladium and optionally platinum and the second catalyst contains rhodium and optionally platinum on an active aluminium oxide, wherein the concentration of the platinum group metals on the active aluminium oxide is 0.1 to 10 wt.%, with respect to the total weight of the particular catalyst.

3. An exhaust gas treatment catalyst according to Claim 2,
characterised in that
the first and/or second catalyst also contains platinum group metal-free active aluminium oxide, cerium oxide and/or zirconium oxide in an amount of 0 to 90 wt.%, with respect to the total weight of the particular catalyst.

4. An exhaust gas treatment catalyst according to Claim 3,
characterised in that
the zeolite in the first functional layer is a ZSM5 zeolite with a molar ratio of more than 40 and the second zeolite in the second functional layer is a dealuminised zeolite Y with a molar ratio of more than 100.

5. An exhaust gas treatment catalyst according to Claim 4,
characterised in that
ceramic or metallic expanded materials with an open-cell porous structure or ceramic or metallic honeycomb structures with parallel flow channels for the exhaust gas are used as support structures, in which the internal wall areas are coated with the functional layers at a concentration of 10 to 300 grams per litre of support structure volume for each of the two functional layers.

6. An exhaust gas treatment catalyst according to one of the preceding Claims,
characterised in that
the ratio by weight of catalyst in one functional layer to zeolite in the functional layer is 1:5 to 5:1.

7. Use of the exhaust gas treatment catalyst according to one of the preceding Claims in an exhaust gas treatment system for internal combustion engines.

## Revendications

1. Catalyseur de purification de gaz d'échappement avec conversion améliorée pour les hydrocarbures, qui contient comme composants catalytiquement actifs des métaux du groupe platine et comporte deux couches fonctionnelles appliquées l'une au-dessus de l'autre sur un corps porteur,
caractérisé en ce que
la première couche fonctionnelle contient un mélange d'un premier catalyseur avec au moins une zéolite et la deuxième couche fonctionnelle appliquée sur la première contient un mélange d'un deuxième catalyseur avec au moins une zéolite, les zéolites ayant un rapport molaire de dioxyde de silicium/oxyde d'aluminium de plus de 40 et en ce que comme métaux du groupe platine sont présents au moins du palladium et du rhodium, qui séparément l'un de l'autre sont contenus respectivement dans une seulement des deux couches fonctionnelles.

2. Catalyseur de purification de gaz d'échappement selon la revendication 1,
caractérisé en ce que
le premier catalyseur contient du palladium et éventuellement du platine et le deuxième catalyseur du rhodium et éventuellement du platine sur un oxyde d'aluminium actif, la concentration des métaux du groupe platine se montant sur l'oxyde d'aluminium actif à 0,1 jusqu'à 10 % en poids, par rapport au poids total du catalyseur respectif.

3. Catalyseur de purification de gaz d'échappement selon la revendication 2,
caractérisé en ce que
le premier et/ou le deuxième catalyseur contiennent en plus de l'oxyde d'aluminium actif sans métaux du groupe platine, de l'oxyde de cérium et/ou de l'oxyde de zirconium en une quantité de 0 à 90 % en poids par rapport au poids total du catalyseur respectif.

4. Catalyseur de purification de gaz d'échappement selon la revendication 3,
caractérisé en ce que
la zéolite de la première couche fonctionnelle est une zéolite ZSM5 avec un rapport molaire de plus de 40 et la deuxième zéolite de la deuxième couche fonctionnelle est une zéolite Y désaluminisée avec un rapport molaire de plus de 100.

5. Catalyseur de purification de gaz d'échappement selon la revendication 4,
caractérisé en ce qu'
on utilise comme corps porteur des mousses céramiques ou métalliques avec une structure de pores à cellules ouvertes ou des corps en nid d'abeilles métalliques avec des canaux d'écoulement parallèles pour le gaz d'échappement, dont les surfaces de paroi internes sont enduites avec les couches fonctionnelles en une concentration de 10 à 300 grammes par litre de volume du corps porteur pour chacune des deux couches fonctionnelles.

6. Système de purification de gaz d'échappement selon une des précédentes revendications,
caractérisé en ce que
le rapport de poids du catalyseur d'une couche fonctionnelle aux zéolites de la couche fonctionnelle se monte à 1 : 5 jusqu'à 5 : 1.

7. Utilisation du catalyseur de purification de gaz d'échappement selon une des revendications précédentes dans le système de purification de gaz d'échappement de moteurs à combustion interne.
